# EUROPÄISCHE PATENTSCHRIFT

(11) **EP 0 753 131 B1**
(45) Veröffentlichungstag und Bekanntmachung des Hinweises auf die Patenterteilung: **06.09.2000**
(21) Anmeldenummer: 95912257.3
(22) Anmeldetag: 21.03.1995
(51) Int. Cl.: G01F 11/26

(54) **ZWEIKAMMERDOSIERER MIT INTEGRIERTEM, ABDICHTENDEM DOSIERMENGENREGULATOR UND SEINE VERWENDUNG**
TWO-CHAMBER METERING DEVICE WITH AN INTEGRAL, SEALING REGULATOR FOR THE AMOUNTS TO BE METERED, AND ITS USE
DOSEUR A DEUX CHAMBRES, A REGULATEUR DES QUANTITES A DOSER INTEGRE ET A FERMETURE ETANCHE, ET SON UTILISATION

(30) Priorität: 30.03.1994 DE 4411021
(43) Veröffentlichungstag der Anmeldung: 15.01.1997
(73) Patentinhaber: Henkel Kommanditgesellschaft auf Aktien, 40191 Düsseldorf (DE)
(72) Erfinder: BONGERS, Bernhard, D-40589 Düsseldorf (DE); FLOHR, Andreas, D-41564 Kaarst (DE); MEURER, Stefan, D-41469 Neuss (DE); WEISS, Volker, D-40764 Langenfeld (DE)
(86) Internationale Anmeldenummer: EP9501041
(87) Internationale Veröffentlichungsnummer: WO9527187

(56) Entgegenhaltungen:
- DE-A- 3 301 898
- DE-A- 3 522 807
- US-A- 2 387 374
- US-A- 2 943 767
- US-A- 5 000 353

## Beschreibung

Die Erfindung betrifft einen rohrförmigen Zweikammerdosierer für Flüssigkeiten zum dichten Einsetzen in eine Behälteröffnung, der eine zylindrische Wand mit einem geschlossenen Boden und einem Deckel mit einem Ausgießkanal aufweist, wobei in der zylindrischen Wand in Nähe des Deckels mindestens eine erste Öffnung und auf einer Umfangslinie zwischen der ersten Öffnung und dem Boden mindestens eine weitere Öffnung vorhanden sind, und in dem durch die zylindrische Wand sowie den Boden und der Deckel umrissenen zylindrischen Raum ein rohrförmiger Körper angeordnet ist, der an seinem einen Ende mit dem Ausgießkanal dicht verbunden ist und mit seinem anderen Ende Abstand vom Boden hält und mindestens eine Öffnung aufweist, wobei in dem rohrförmigen Körper ein freibewegbarer Körper mit kreisförmigem Querschnitt vorgesehen ist, dessen Durchmesser größer ist als der des Ausgießkanals und kleiner als der des rohrförmigen Körpers und dessen kleinste Abmessung größer ist als der Spalt zwischen dem rohrförmigen Körper und dem Boden.

Ein Dosierer dieser Art ist aus der DE-A-35 22 807 bekannt. In Überkopfstellung ist hier die Öffnung im rohrförmigen Körper vertikal unterhalb der weiteren Öffnung in der Wand angeordnet. In dieser Stellung füllt sich der rohrförmige Körper mit Flüssigkeit bis zu der durch die Unterkante der weiteren Öffnung bestimmten Radialebene. Die überschüssige Flüssigkeit fließt durch die weitere Öffnung in den Behälter zurück.

Es gibt vielfältige Anwendungsfälle, in denen Flüssigkeiten aus einem Behälter in dosierter Menge abgegeben werden sollen. Dieses Problem ist im Getränkeausschank genauso bekannt wie bei der portionsweisen Abgabe von Chemikalien, Ölen oder flüssigen Wirkstoffen. Ein hierfür einsetzbarer Dosierer ist aus dem europäischen Patent 0 175 256 bekannt. Dieser Dosierer hat den Nachteil, daß er nur in Verbindung mit relativ steifen Behältern eingesetzt werden kann, da sich bei seinem Gebrauch im Behälter ein Unterdruck einstellt, der bei flexiblen Behältern zu einer gewissen Kontraktion des Behälters führen könnte, durch die die Funktion des Dosierers erheblich gestört oder unterbunden wird. Außerdem hat sich herausgestellt, daß die Verschiebbarkeit des Ausgießkanals zur Dosiermengenregelung in der Deckeldurchführung je nach zu handhabender Flüssigkeit zu Leckagen oder durch Verschmieren zum Festsetzen neigt und der Dosierer dadurch unbrauchbar bzw. das Dosiervolumen unveränderbar wird.

Wenn der Behälter mit dicht eingesetztem Zweikammerdosierer entsprechend der EP 0 175 256 in Ausgießstellung, d. h. mit der Spitze nach unten gebracht wird, tritt die Flüssigkeit durch die Öffnungen in der äußeren Wand ein und steigt in dem durch die Wand begrenzten Raum soweit hoch, bis der Flüssigkeitsdruck im Gleichgewicht mit dem atmosphärischen Druck steht, der über die Ausgießöffnung im in dieser Stellung oberen Teil des Dosierers ansteht.

Ist der bekannte Behälter zu steif, daß er vom atmosphärischen Druck nicht verformt werden kann, wird das Absinken unmittelbar nach dem Erreichen der in dieser Stelle höchstgelegenen Verbindungsstelle zur umgebenden Atmosphäre zum Stillstand kommen, da sich im Behälter jetzt ein Unterdruck zu bilden beginnt. In diesem Fall, d. h. bei genügend steifem Behältermaterial, wird durch die oberste Spitze der Kerbe im Trichter das Dosiervolumen bestimmt. Ist das Behältermaterial jedoch so flexibel, daß es sich unter dem atmosphärischen Druck verformt, steigt die Flüssigkeit im Dosierer in der Ausgießstellung noch weiter an, so daß in der Ausgießstellung Flüssigkeit in den Trichter läuft und damit zusätzlich ausgegossen wird.

Es hat zwar schon Vorschläge gegeben, Dosierer mit in der Dosierkammer angeordneten losen Körpern kreisförmigem Querschnitts auszubilden. Solche Dosierer sind beispielsweise aus dem französischen Patent 402.258, der DE-AS 1 133 650 und dem DE-GM 78 10 073 bekannt. Alle diese Beispiele beschreiben Dosierer, bei denen eine Kugel in einer auf den Durchmesser der Kugel abgestimmten rohrförmigen Führung vorgesehen ist, die Abdichtzwecken bzw. dem Verschluß des Dosierers dient. Außerdem handelt es sich in allen drei Fällen nicht um Zweikammerdosierer. In den Fällen des französischen Patents 402.258 sowie der DE-AS 1 133 650 fließt die Flüssigkeit solange direkt aus dem Behälter, wie die Kugel an Zeit benötigt, um von einer Ausgangsposition in die Verschlußposition zu laufen. Diese zeitabhängige Dosiersteuerung ist abhängig von den geometrischen und physikalischen, besonders den rheologischen Verhältnissen des Dosierers bzw. der Flüssigkeit und der verwendeten Materialien. Während der für das Absinken der Kugel benötigten Zeit fließt die Flüssigkeit direkt aus dem Behälter in den Ausgießkanal.

Die der Erfindung zugrunde liegende Aufgabe besteht darin, einen Dosierer vorzuschlagen, der bei einer exakter arbeitenden, sicheren Regelbarkeit der Dosiermengen kostengünstig zu produzieren und einfach und zuverlässig in seiner Funktion ist.

Diese Aufgabe wird bei dem Dosierer der eingangs genannten Art erfindungsgemäß dadurch gelöst, daß in Überkopfstellung die Öffnung im rohrförmigen Körper vertikal um einen Abstand oberhalb der weiteren Öffnung angeordnet ist, so daß das sich beim Betrieb am Flüssigkeitspegel im Dosierer einstellende Druckgleichgewicht zwischen dem Flüssigkeitsdruck und dem Druck des oberhalb des Flüssigkeitspegels vorhandenen Luftvolumens einen Stillstand des Anstiegs des Flüssigkeitspegels bewirkt, bevor dieser die Öffnung im rohrförmigen Körper erreicht.

Weiterhin wird vorgeschlagen, daß die Verbindung zwischen dem rohrförmigen Körper und dem Ausgießkanal als Trichter ausgebildet ist und der freibewegbare Körper mindestens ein halbkugelförmiges Ende aufweist. Der freibewegbare Körper kann je nach den Eigenschaften der handruhabenden Flüssigkeit vorteilhaft als Kugel oder als Kegel ausgebildet sein. Beide Geometrien gewährleisten, daß sich der freibewegbare Körper nicht in dem Spalt des Hauptdosierraums zwischen dem rohrförmigen Körper und dem Boden festsetzt und damit funktionsunfähig wird und daß andererseits der Ausgießkanal trichterseitig dicht verschlossen werden kann.

Beim erfindungsgemäßen Dosierer steigt in der Ausgießstellung des Behälters die Flüssigkeit im in dieser Stellung unteren Bereich des Dosierers, der hier Sammelraum genannt wird, an. Gleichzeitig wird der Ausgießkanal, gegebenenfalls nach Entleerung der vorherigen Dosiermenge, durch den freibewegbaren Körper verschlossen. Das Behältervolumen ist nun gegen den atmosphärischen Druck abgeschlossen. Wenn die Flüssigkeit jetzt im Dosierer soweit steigt, daß die Öffnungen in der Wand des Dosierers abgedeckt werden, besteht keine Möglichkeit zum Druck- und Produktausgleich zwischen dem oberen, hier Dosierraum genannten Bereich des Dosierers und dem Inneren des Behälters. Das in dieser Stellung im Dosierraum oberhalb der Öffnungen in der Wand vorhandene Luftvolumen wird komprimiert, und der Flüssigkeitspegel steigt entsprechend soweit an, bis der Druck der komprimierten Luft mit der Flüssigkeitssäule im Gleichgewicht steht. Der vertikale Abstand zwischen der weiteren Öffnung in der Wand und der Öffnung im rohrförmigen Körper ist so bemessen, daß der durch Erreichen des Druckgleichgewichtes bewirkte Stillstand des Anstiegs der Flüssigkeit in jedem Fall bewirkt wird, bevor die Flüssigkeit durch die Öffnung im rohrförmigen Körper in den Hauptdosierraum eintreten kann. Unter dem Begriff "Hauptdosierraum" wird hier der Raum im rohrförmigen Körper zwischen dessen Öffnung und dem Boden des Dosierers verstanden. Wird der Behälter jetzt um 180° gedreht, d. h. in eine Stellung gebracht, in der der Dosierer und die Ausgießöffnung oben sind, fällt der freibewegbare Körper aus der Verschlußstellung herunter und die Flüssigkeit sinkt so lange nach unten, bis sie im gesamten Dosierraum das Niveau der jetzt unten liegenden Öffnung im rohrförmigen Körper erreicht. Die jetzt noch oberhalb der Öffnung im rohrförmigen Körper stehende Flüssigkeitssäule würde bei einem weiteren Absinken einen Unterdruck im Inneren des Dosierers und des Behälters erzeugen, da durch den Abschluß der Öffnungen im rohrförmigen Körper kein Druck- und Produktausgleich mehr stattfinden kann. Die Säule wird dann durch das Gleichgewicht mit dem atmosphärischen Druck zum Stillstand gebracht.

Weiterhin wird vorgeschlagen, daß die Verbindung zwischen dem rohrförmigen Körper und dem Ausgießkanal als Trichter ausgebildet ist und der freibewegbare Körper mindestens ein kegelförmiges Ende aufweist.

Vorzugsweise sind der Ausgießkanal und der rohrförmige Körper gegen die Innenfläche der zylindrischen Wand abgestützt.

Bei der Verwendung des Dosierers wird durch den Verschluß zur umgebenden Atmosphäre in Überkopfstellung die Dosiermenge durch einen Druckausgleich im geschlossenen System bestimmt. Daher ist die Flexibilität des Behälters ohne Einfluß, und der Behälter kann vorteilhaft aus dünnem flexiblen Material hergestellt werden, was sich auch vorteilhaft auf eine eventuelle Wiederaufarbeitung des Behälters auswirkt.

Weiterhin wird vorgeschlagen, daß auch der Dosierer aus flexiblem Material hergestellt ist.

Besonders günstig läßt sich der Dosierer herstellen, wenn er dreiteilig ausgebildet ist. Hierbei sind die beiden Hauptteile kostengünstig und sehr exakt beispielsweise als Kunststoffspritzteile herstellbar. Diese können darüber hinaus den Vorteil haben, daß sie durch eine gewisse Transparenz die Situation im Dosierer gut erkennen lassen. Es wird daher vorgeschlagen, daß der Dosierer dreistückig ist, wobei die Wand und der Boden einen ersten Teil, der Deckel, der Ausgießkanal, der Trichter und der rohrförmige Körper einen zweiten Teil und der freibewegbare Körper einen dritten Teil bilden und der erste Teil koaxial in den zweiten Teil einsteckbar ist.

Weiterhin wird vorgeschlagen, daß unterhalb des Deckels Abstandshalter ausgebildet sind, die im eingesteckten Zustand an dem oberen Rand der Wand anliegen, so daß zwischen dem Deckel und der zylindrischen Wand die erste Öffnung gebildet wird, die als Ringspalt ausgebildet ist. Die Ausbildung der ersten Öffnung in der Wand des Dosierers als Ringspalt unmittelbar zwischen dem Deckel und der Wand bietet vorteilhaft die Möglichkeit, diese Öffnung genügend groß und an einer Stelle auszubilden, die das vollständige Entleeren des Behälters ermöglicht.

Eine zentrierende Abstützung des Ausgießkanals und des rohrförmigen Körpers gegenüber der Innenfläche der Wand ermöglicht, besonders in der dreiteiligen Form, eine exakte Ausrichtung auch während des Gebrauchs. Dazu wird vorgeschlagen, daß an der Innenfläche der Wand nahe derem oberen Rand ein ringförmiger Wulst ausgebildet ist, daß zur zentrierenden Abstützung des Ausgießkanals an diesem sich radial erstreckende Arme angeordnet sind und die äußeren oberen Enden dieser radialen Arme unterhalb des ringförmigen Wulstes arretiert sind. Am Wulst kann das aus dem Ausgießkanal, Trichter und rohrförmigen Körper bestehende Teil in einfacher Weise festgelegt werden. Während bei der Verwendung steifer Materialien dieser Wulst entsprechende Durchgangsausnehmungen aufweisen müßte, kann bei der Verwendung flexibler Materialien das zur Arretierung vorgesehene Teil, beispielsweise die äußeren oberen Enden der radialen Arme, in einfacher Weise über den Wulst hinweggedrückt und dann darunter arretiert werden.

Weiterhin wird vorgeschlagen, daß zur zentrierenden Abstützung des rohrförmigen Körpers an der Innenfläche der zylinderförmigen Wand radial nach innen gerichtete Stege vorgesehen sind, die in der Nähe des Bodens angeordnet sind und deren obere Kante schräg nach unten verläuft. Die nach unten schräg verlaufende Kante der Stege bietet in einfacher Weise die Möglichkeit, beim Einstecken des rohrförmigen Körpers eine zentrierte Lage herbeizuführen und beizubehalten.

Der erfindungsgemäße Dosierer kann sowohl mit einem im Vergleich zur Dichte der Flüssigkeit leichteren oder schwereren freibewegbaren Körper verwendet werden. Bei diesen Alternativen sind allerdings unterschiedliche Volumenverhältnisse zu berücksichtigen.

Im Falle eines leichteren freibewegbaren Körpers schwimmt dieser im Hauptdosierraum angeordnete Körper auf der Flüssigkeit nach oben. Damit er dabei nicht in eine Position aufschwimmt, in welcher er den Ausgießkanal bereits abdichtend verschließt, müssen die Öffnungen im rohrförmigen Körper entsprechend weit in Richtung des Bodens angeordnet sein. In diesem Fall wird vorgeschlagen, daß der freibewegbare Körper ein solches Eintauchvolumen aufweist, daß das in dem vom rohrförmigen Körper zwischen der Öffnung und dem Boden umrissenen Hauptdosierraum nach Abzug des Eintauchvolumens verbleibende freie Volumen gleich den Volumen der zu dosierenden Flüssigkeitsmenge ist.

Im Falle eines im Vergleich zur Flüssigkeit schwereren freibewegbaren Körpers sinkt dieser im Hauptdosierraum immer nach unten. Die Geschwindigkeit des Absinkens wird unter anderem durch die Differenz der Wichten und die Viskosität der Flüssigkeit bestimmt. Hier wird vorgeschlagen, daß der freibewegbare Körper ein solches Volumen aufweist, daß das im Hauptdosierraum nach Abzug des Körpervolumens verbleibende freie Volumen größer ist als das Volumen der zu dosierenden Flüssigkeit.

Auf diese einfache Weise läßt sich sowohl für einen aufschwimmenden als auch für einen absinkenden freibewegbaren Körper das zu dosierende Flüssigkeitsvolumen bei konstanter Geometrie des Hauptdosierraums durch Variation des Volumens des freibewegbaren Körpers regeln.

Ferner betrifft die Erfindung die Verwendung des erfindungsgemäßen Zweikammerdosierers zum Dosieren von Flüssigkeiten aus einem Sammelbehälter. Hier wird vorgeschlagen, daß die Dichte des freibewegbaren Körpers geringer ist als die der zu dosierenden Flüssigkeit und daß das Eintauchvolumen des freibewegbaren Körpers so bestimmt wird, daß das im Hauptdosierraum nach Abzug des Eintauchvolumens verbleibende freie Volumen gleich dem Volumen der zu dosierenden Flüssigkeit ist.

Alternativ wird vorgeschlagen, daß die Dichte des freibewegbaren Körpers größer ist als die der zu dosierenden Flüssigkeit und daß das Volumen des freibewegbaren Körpers so bestimmt wird, daß das im Hauptdosierraum nach Abzug des Körpervolumens verbleibende freie Volumen um so viel größer ist als das zu dosierende Flüssigkeitsvolumen, wie es dem nach Absinken des freibewegbaren Körpers und Verschließen des Ausgießkanals durch den freibewegbaren Körper im Hauptdosierraum verbleibenden Restvolumen entspricht.

Nachfolgend wird ein Ausführungsbeispiel der Erfindung anhand von Zeichnungen näher beschrieben. Es zeigen
- Figur 1: eine Seitenansicht eines in einem Behälter eingesetzten Zweikammerdosierers in teilweise geschnittener Form und
- Figur 2: eine Querschnittsansicht des Zweikammerdosierers nach Figur 1 in zwei höhenversetzten Schnittebenen.

In beiden Zeichnungen haben gleiche Bezugszeichen die gleiche Bedeutung und werden daher gegebenenfalls nur einmal erläutert.

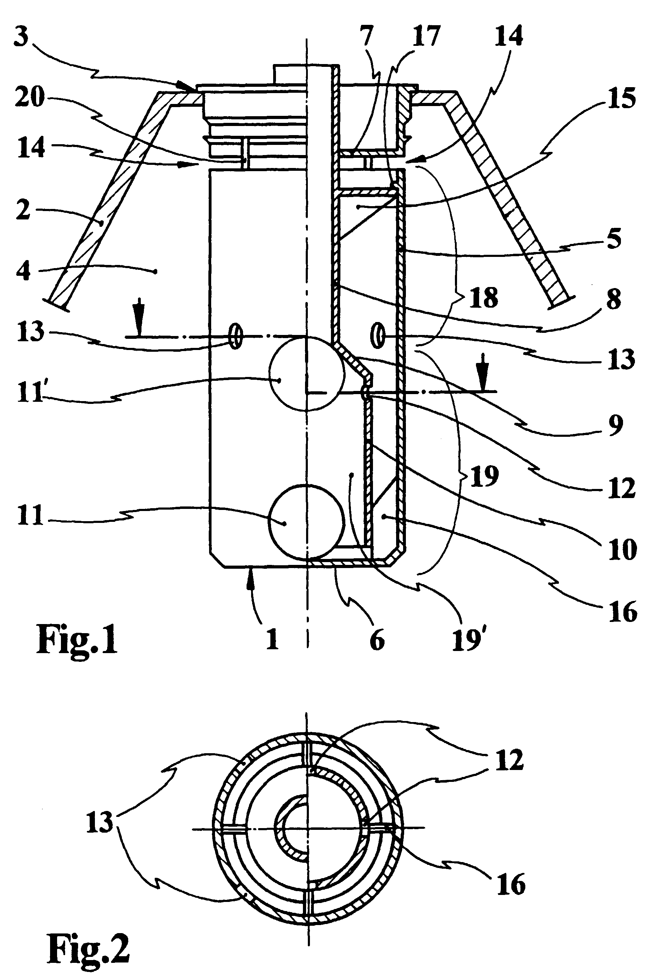

In Fig. 1 ist dargestellt, wie der Zweikammerdosierer 1 in die Öffnung 3 eines Behälters 2 eingesteckt ist und die Öffnung 3 dichtend abschließt. Im dargestellten Ausführungsbeispiel ist der Zweikammerdosierer 1 dreiteilig ausgebildet. Dabei bilden die zylindrische Wand 5 und der Boden 6 ein Teil, der Deckel 7 mit dem eingeformten Ausgießkanal 8, dem sich daran anschließenden Trichter 9 und der daran angeformten rohrförmigen Körper 10 den zweiten Teil und eine Kugel 11 den dritten Teil. Der Innenraum des Dosierers 1 wird durch Öffnungen 13 in der Wand 5 praktisch in zwei Teilräume geteilt, nämlich den zum oberen Rand hin gelegenen Sammelraum 18 und den zum Boden 6 hin gebildeten Dosierraum 19. Innerhalb des Dosierraums 19 wird durch den rohrförmigen Körper 10 unterhalb von Öffnungen 12 und den Boden 6 ein Hauptdosierraum 19' umrissen, in dem ein freibewegbarer Körper in Form einer Kugel 11 angeordnet ist.

Der Teil aus Deckel 7, Ausgießkanal 8, Trichter 9 und rohrförmigem Körper 10 ist in den Außenzylinder mit der Wand 5 und dem Boden 6 eingeschoben und sitzt mit den am Deckel 7 außen angeformten Rippen 20 auf dem oberen Rand des Außenzylinders auf, wodurch ein Abstand gehalten wird, durch den ein Ringspalt 14 zwischen Deckel und Außenzylinder gebildet wird. Die Außenfläche des Deckels 7 ist durch eine geeignete Profilierung zum dichtenden Einsatz in die Behälteröffnung 3 ausgebildet. Am Ausgießkanal 8 sind Arme 15 angeformt, die sich sternförmig radial nach außen erstrecken und an der Innenfläche der Wand 5 anliegen. Zum Festsetzen innerhalb der Wand 5 ist an dessen zylindrischer Innenfläche ein Wulst 17 in der Nähe des oberen Randes ausgebildet. Dieser Wulst 17 kann sich ringförmig über den gesamten Umfang erstrecken, wenn zumindest ein Teil aus flexiblem Material hergestellt ist, so daß die sternförmig angeordneten Arme 15 über diesen Wulst vorbeigeschoben werden können. Wird der Dosierer aus einem steifen Material hergestellt, müssen in dem Wulst Ausnehmungen vorgesehen werden und der eingesteckte Teil nach Passieren des Wulstes durch Drehung arretiert werden. Im unteren Teil des Außenzylinders sind radial nach innen gerichtete Stege 16 ausgebildet, die im eingesteckten Zustand an der Außenfläche des rohrförmigen Körpers 10 anliegen. Die obere Kante der Stege 16 läuft schräg nach unten und bewirkt ein Zentrieren des rohrförmigen Körpers beim Einstecken.

Im Ausführungsbeispiel sind Ausgießkanal 8, Trichter 9 und rohrförmiger Körper 10 zentrisch zum Deckel und insgesamt innerhalb der Wand 5 angeordnet, wobei aber auch eine exzentrische Anordnung möglich ist.

Im Außenzylinder sind, etwa in Höhe des Trichters, die weiteren Öffnungen 13 vorhanden. Zwischen diesen Öffnungen 13 und dem oberen Rand der Wand 5 wird der sogenannte Sammelraum 18 gebildet. Das freie Volumen des Sammelraums, d. h. das Ringvolumen zwischen Wand 5 und Ausgießkanal 8 soll größer sein als der Teil des Dosierraumes 19, der zwischen dem Boden 6 und dem Niveau liegt, in dem im Körper 10 Öffnungen 12 vorhanden sind. Außerdem soll der Abstand zwischen den Öffnungen 12 im eingesteckten Zustand und den Öffnungen 13 ausreichend bemessen sein, damit bei dem später zu beschreibenden Dosiervorgang kein Überlaufen der Flüssigkeit eintreten kann. Vom Boden 6 und dem Körper 10 wird innerhalb des Dosierraums 19 ein sogenannter Hauptdosierraum 19' umrissen, der sich bis zur Höhe der Oberkante der Öffnungen 12 erstreckt.

Nachfolgend wird der Dosiervorgang beschrieben. Wird der Behälter 2 auf den Kopf gestellt, fließt die im Hauptdosierraum 19' vorhandene Flüssigkeit durch den Ausgießkanal 8 aus und die Kugel 11 bewegt sich in die durch das Bezugszeichen 11' angedeutete Position, wobei sie den Ausgießkanal 8 verschließt. Gleichzeitig läuft die im Behälter vorhandene Flüssigkeit in den Behälterkopf und durch den Ringspalt 14 in den Dosierer 1. Dabei steigt die Flüssigkeit innerhalb des Dosierers 1 bis zur Höhe der Öffnungen 13 an. Wie bereits beschrieben, kommt das Ansteigen der Flüssigkeit nach Abdecken der Öffnungen 13 zum Stillstand, da das oberhalb des Flüssigkeitsniveaus vorhandene Luftvolumen abgeschlossen ist und die Luft komprimiert wird. Sobald der Luftdruck mit dem Flüssigkeitsdruck im Gleichgewicht sind, ist das endgültige Niveau erreicht.

Für die Bewegung der Kugel 11 in die den Ausgießkanal 8 verschließende Position 11 ist zu unterscheiden zwischen den Fällen, daß es sich um eine Schwimm- oder eine Sinkkugel 11 handelt. Im Falle der Schwimmkugel 11 wird der Ausgießkanal 8 erst dann durch die Kugel 11 verschlossen, wenn die gesamte im Hauptdosierraum 19' vorhandene Flüssigkeit ausgegossen ist. Im Falle einer Sinkkugel 11 wird der Ausgießkanal 8 bereits verschlossen, wenn sich im Hauptdosierraum noch ein Rest-Flüssigkeitsvolumen befindet. In diesem Fall ist das Volumen der Kugel in Abstimmung auf die Geometrie des Hauptdosierraums 19' und die Wichtedifferenz sowie die Viskosität der Flüssigkeit und die dadurch beeinflußte Absinkgeschwindigkeit der Kugel 11 so zu bestimmen, daß das vor Verschließen des Ausgießkanals 8 ausgegossene Volumen dem zu dosierenden Flüssigkeitsvolumen entspricht.

Wird der Behälter danach in eine aufrechte Position gebracht fällt die Kugel 11 nach unten und gibt die Verbindung zur umgebenden Atmosphäre wieder frei. Gleichzeitig fließt die Flüssigkeit aus dem Sammelraum 18 in den Dosierraum 19, wobei das Flüssigkeitsniveau innerhalb des rohrförmigen Körpers 10 in einen Gleichgewichtszustand kommt, sobald die Öffnungen 12 verschlossen sind. Danach kann kein Luft- oder Produktausgleich mehr zwischen Hauptdosierraum 19' und dem übrigen Dosier- bzw. Behälterraum stattfinden. Ein weiteres Nachlaufen der Flussigkeit wurde im Behälterinneren 4 einen Unterdruck erzeugen, während die Flüssigkeit im Hauptdosierraum 19' unter atmosphärischem Druck steht. Hieraus wird verständlich, daß durch die Höhe, in der die Öffnungen 12 vorgesehen sind, das Bruttovolumen des Hauptdosierraums 19' bestimmt wird.

Das wirksame Dosiervolumen wird letztlich durch den Rauminhalt der Kugel 11 bestimmt. Nur der von der Kugel 11 nicht eingenommene Raum im Hauptdosierraum 19' kann von der Flüssigkeit ausgefüllt werden. Hiermit wird verständlich, daß durch Verwendung von Kugeln 11 unterschiedlichen Volumens unter Berücksichtigung der oben beschriebenen Unterschiede für Schwimm- und Sinkkugeln 11 auf leichte Weise die effektive Dosiermenge geregelt werden kann, selbst wenn der Hauptdosierraum 19' durch seine Geometrie in seinem Bruttovolumen festgelegt ist.

Wird der Behälter jetzt wieder in Überkopfstellung gebracht und fließt die im Hauptdosierraum 19' vorhandene Flüssigkeitsmenge im Falle einer Schwimmkugel 11 ganz und im Falle einer Sinkkugel 11 teilweise durch den Ausgießkanal 8 aus, dann wird der Ausgießkanal durch die Kugel 11 in ihrer Stellung 11' verschlossen und der oben beschriebene Vorgang wiederholt sich.

In Fig. 2 ist ein Querschnitt durch den Zweikammerdosierer dargestellt. Hierbei sind zwei von vier Öffnungen 13 in der Wand 5 erkennbar, die im dargestellten Beispiel um etwa 90° versetzt angeordnet sind und von denen die beiden auf der linken Zylinderhälfte vorhandenen Öffnungen dargestellt sind. Im rechten Teilbild sind die ebenfalls um 90° versetzten Öffnungen 12 im rohrförmigen Körper 10 erkennbar. Gut zu erkennen sind auch die Stege 16, die den Innenzylinder zentrierend abstützen.

Beim Gebrauch ist die Öffnung des Ausgießkanals 8 offen. Wird der Behälter nicht gebraucht, kann entweder die Ausgießöffnung durch einen in der Zeichnung nicht dargestellten Verschluß separat oder aber die Behälteröffnung insgesamt durch einen Deckel verschlossen werden.

### Bezugszeichenliste

- 1: Zweikammerdosierer
- 2: Behälter
- 3: Behälteröffnung
- 4: Behälterinneres
- 5: zylindrische Wand
- 6: Boden
- 7: Deckel
- 8: Ausgießkanal
- 9: Trichter
- 10: rohrförmiger Körper
- 11: freibewegbarer Körper (Kugel)
- 12: Öffnung im rohrförmigen Körper 10
- 13: weitere Öffnung
- 14: erste Öffnung (Ringspalt)
- 15: Arm
- 16: Stege
- 17: ringförmiger Wulst
- 18: Sammelraum
- 19: Dosierraum
- 19': Hauptdosierraum
- 20: Abstandshalter (Rippen)

## Patentansprüche

1. Rohrförmiger Zweikammerdosierer (1) für Flüssigkeiten zum dichten Einsetzen in eine Behälteröffnung (3), der eine zylindrische Wand (5) mit einem geschlossenen Boden (6) und einem Deckel (7) mit einem Ausgießkanal (8) aufweist, wobei in der zylindrischen Wand (5) in Nähe des Deckels (7) mindestens eine erste Öffnung (14) und auf einer Umfangslinie zwischen der ersten Öffnung (14) und dem Boden (6) mindestens eine weitere Öffnung (13) vorhanden sind, und in dem durch die zylindrische Wand (5) sowie den Boden (6) und der Deckel (7) umrissenen zylindrischen Raum ein rohrförmiger Körper (10) angeordnet ist, der an seinem einen Ende mit dem Ausgießkanal (8) dicht verbunden ist und mit seinem anderen Ende Abstand vom Boden (6) hält und mindestens eine Öffnung (12) aufweist, wobei in dem rohrförmigen Körper (10) ein freibewegbarer Körper (11) mit kreisförmigem Querschnitt vorgesehen ist, dessen Durchmesser größer ist als der des Ausgießkanals (8) und kleiner als der des rohrförmigen Körpers (10) und dessen kleinste Abmessung größer ist als der Spalt zwischen dem rohrförmigen Körper (10) und dem Boden (6),
**dadurch gekennzeichnet**,
daß in Überkopfstellung die Öffnung (12) im rohrförmigen Körper (10) vertikal um einen Abstand oberhalb der weiteren Öffnung (13) angeordnet ist, so daß das sich beim Betrieb am Flüssigkeitspegel im Dosierer einstellende Druckgleichgewicht zwischen dem Flüssigkeitsdruck und dem Druck des oberhalb des Flüssigkeitspegels vorhandenen Luftvolumens einen Stillstand des Anstiegs des Flüssigkeitspegels bewirkt, bevor dieser die Öffnung (12) im rohrförmigen Körper (10) erreicht.

2. Dosierer nach Anspruch 1,
**dadurch gekennzeichnet**,
daß die Verbindung zwischen dem rohrförmigen Körper (10) und dem Ausgießkanal (8) als Trichter (9) ausgebildet ist und der freibewegbare Körper (11) mindestens ein halbkugelförmiges Ende aufweist.

3. Dosierer nach Anspruch 1,
**dadurch gekennzeichnet**,
daß die Verbindung zwischen dem rohrförmigen Körper (10) und dem Ausgießkanal (8) als Trichter (9) ausgebildet ist und der freibewegbare Körper (11) mindestens ein kegelförmiges Ende aufweist.

4. Dosierer nach einem der Ansprüche 1 bis 3,
**dadurch gekennzeichnet**,
daß der Ausgießkanal (8) und der rohrförmige Körper (10) gegen die Innenfläche der zylindrischen Wand (5) abgestützt sind.

5. Dosierer nach einem der Ansprüche 1 bis 4,
**dadurch gekennzeichnet**,
daß er aus flexiblem Material hergestellt ist.

6. Dosierer nach einem der Ansprüche 2 bis 5,
**dadurch gekennzeichnet**,
daß er dreistückig ist, wobei die zylindrische Wand (5) und der Boden (6) einen ersten Teil, der Deckel (7), der Ausgießkanal (8), der Trichter (9) und der rohrförmige Körper (10) einen zweiten Teil und der freibewegbare Körper (11) einen dritten Teil bilden und der erste Teil koaxial in den zweiten Teil einsteckbar ist.

7. Dosierer nach Anspruch 6,
**dadurch gekennzeichnet**,
daß unterhalb des Deckels (7) Abstandshalter (20) ausgebildet sind, die im eingesteckten Zustand an dem oberen Rand der Wand (5) anliegen, so daß zwischen dem Deckel (7) und der zylindrischen Wand (5) die erste Öffnung (14) gebildet wird, die als Ringspalt ausgebildet ist.

8. Dosierer nach Anspruch 6 oder 7,
**dadurch gekennzeichnet**,
daß an der Innenfläche der zylindrischen Wand (5) nahe derem oberen Rand ein ringförmiger Wulst (17) ausgebildet ist, daß zur zentrierenden Abstützung des Ausgießkanals (8) an diesem sich radial erstreckende Arme (15) angeordnet sind und die äußeren oberen Enden dieser radialen Arme (15) unterhalb des ringförmigen Wulstes (17) arretiert sind.

9. Dosierer nach einem der Ansprüche 6 bis 8,
**dadurch gekennzeichnet**,
daß zur zentrierenden Abstützung des rohrförmigen Körpers (10) an der Innenfläche der zylindrischen Wand (5) radial nach innen gerichtete Stege (16) vorgesehen sind, die in der Nähe des Bodens (6) angeordnet sind und deren obere Kante schräg nach unten verläuft.

10. Dosierer nach einem der Ansprüche 1 bis 9,
**dadurch gekennzeichnet**,
daß der freibewegbare Körper (11) ein solches Eintauchvolumen aufweist, daß das in dem vom rohrförmigen Körper (10) zwischen der Öffnung (12) und dem Boden (6) umrissenen Hauptdosierraum (19) nach Abzug des Eintauchvolumens verbleibende freie Volumen gleich den Volumen der zu dosierenden Flüssigkeitsmenge ist.

11. Dosierer nach einem der Ansprüche 1 bis 9,
**dadurch gekennzeichnet**,
daß der freibewegbare Körper (11) ein solches Volumen aufweist, daß das im Hauptdosierraum (19) nach Abzug des Körpervolumens verbleibende freie Volumen größer ist als das Volumen der zu dosierenden Flüssigkeit.

12. Verwendung eines Zweikammerdosierers nach einem der Ansprüche 1 bis 9, zum Dosieren von Flüssigkeiten aus einem Sammelbehälter, wobei die Dichte des freibewegbaren Körpers (11) geringer ist als die der zu dosierenden Flüssigkeit und das Eintauchvolumen des freibewegbaren Körpers (11) so bestimmt wird, daß das im Hauptdosierraum (19) nach Abzug des Eintauchvolumens verbleibende freie Volumen gleich dem Volumen der zu dosierenden Flüssigkeit ist.

13. Verwendung eines Zweikammerdosierers nach einem der Ansprüche 1 bis 9, zum Dosieren von Flüssigkeiten aus einem Sammelbehälter, wobei die Dichte des freibewegbaren Körpers (11) größer ist als die der zu dosierenden Flüssigkeit und das Volumen des freibewegbaren Körpers (11) so bestimmt wird, daß das im Hauptdosierraum (19) nach Abzug des Körpervolumens verbleibende freie Volumen um so viel größer ist als das zu dosierende Flüssigkeitsvolumen, wie es dem nach Absinken des freibewegbaren Körpers (11) und Verschließen des Ausgießkanals (8) durch den freibewegbaren Körper (11) im Hauptdosierraum (19) verbleibenden Restvolumen entspricht.

## Claims

1. A tubular two-compartment dispenser (1) for liquids which is designed to fit tightly in the opening (3) of a container and which comprises a cylindrical wall (5) with a continuous base (6) and a cover (7) with a pouring channel (8), the arrangement being such that at least one opening (14) is present in the cylindrical wall (5) in the vicinity of the cover (7) and at least one other opening (13) is present on a peripheral line between the first opening (14) and the base (6) and a tubular body (10) is arranged in the outer cylindrical space defined by the cylidrical wall (5) and by the base (6) and the cover (7) and, at one end, is tightly connected to the pouring channel (8) and, at its other end, remains at a distance from the base (6) and has at least one opening (12), a freely movable body (11) of circular cross-section being provided in the tubular body (10), its diameter being greater than that of the pouring channel (8) and smaller than that of the tubular body (10) and its smallest dimension being larger than the gap between the tubular body (10) and the base (6), characterized in that, in the inverted position, the opening (12) in the tubular body (10) is arranged vertically above the opening (13) so that the pressure equilibrium established between the liquid pressure and the pressure of the volume of air present above the liquid level during operation at the liquid level in the dispenser stops the liquid level from rising before it reaches the opening (12) in the tubular body (10).

2. A dispenser as claimed in claim 1, characterized in that the connection between the tubular body (10) and the pouring channel (8) is in the form of a funnel (9) and in that the freely movable body (11) has at least one hemispherical end.

3. A dispenser as claimed in claim 1, characterized in that the connection between the tubular body (10) and the pouring channel (8) is in the form of a funnel (9) and in that the freely movable body (11) has at least one conical end.

4. A dispenser as claimed in any of claims 1 to 3, characterized in that the pouring channel (8) and the tubular body (10) are supported by the inner surface of the cylindrical wall (5).

5. A dispenser as claimed in any of claims 1 to 4, characterized in that it is made of a flexible material.

6. A dispenser as claimed in any of claims 2 to 5, characterized in that it is in three parts, the cylindrical wall (5) and the base (6) forming a first part, the cover (7), the pouring channel (8), the funnel (9) and the tubular body (10) forming a second part and the freely movable body (11) forming a third part, the first part being designed to fit coaxially in the second part.

7. A dispenser as claimed in claim 6, characterized in that spacers (20) are formed underneath the cover (7) and, in the inserted position, bear against the upper edge of the wall (5) so that the first opening (14) in the form of an annular gap is formed between the cover (7) and the cylindrical wall (5).

8. A dispenser as claimed in claim 6 or 7, characterized in that an annular bead (17) is formed on the inner surface of the cylindrical wall (5) near its upper edge, in that radially extending arms (15) are arranged on the pouring channel (8) for centringly supporting the pouring channel (8) and in that the outer upper ends of the radial arms (15) are locked in place beneath the annular bead (17).

9. A dispenser as claimed in any of claims 6 to 8, characterized in that, for centringly supporting the cylindrical wall (10), arms (16) directed radially inwards are provided on the inner surface of the cylindrical wall (5), the arms (16) being arranged near the base (6) and their upper edge extending obliquely downwards.

10. A dispenser as claimed in any of claims 1 to 9, characterized in that thefreely movable body (11) has such an immersion volume that the free volume remaining in the main metering compartment (19) defined by the tubular body (10) between the opening (12) and the base (6) after subtraction of the immersion volume is equal to the volume of liquid to be dispensed.

11. A dispenser as claimed in any of claims 1 to 9, characterized in that the freely movable body (11) has such a volume that the free volume remaining in the main metering compartment (19) after the volume of the body has been subtracted is greater than the volume of liquid to be dispensed.

12. The use of the two-compartment dispenser claimed in any of claims 1 to 9 for dispensing liquids from a collecting container, the density of the freely movable body (11) being lower than that of the liquid to be dispensed and the immersion volume of the freely movable body (11) being gauged in such a way that the free volume remaining in the main metering compartment (19) after subtraction of the immersion volume is equal to the volume of liquid to be dispensed.

13. The use of the two-compartment dispenser claimed in any of claims 1 to 9 for dispensing liquids from a collecting container, the density of the freely movable body (11) being greater than that of the liquid to be dispensed and the volume of the freely movable body (11) being gauged in such a way that the free volume remaining in the main metering compartment (19) after the volume of the body has been subtracted is greater than the volume of liquid to be dispensed by a margin which corresponds to the residual volume remaining in the main metering compartment (19) space after the freely movable body (11) has sunk and closed the pouring channel (8).

## Revendications

1. Doseur à deux chambres (1), pour liquides, de forme tubulaire pour montage étanche dans une ouverture de récipient (3) dans lequel :
- une paroi cylindrique (5) est fermée par un fond (6) et un couvercle (7) est équipé d'un canal d'écoulement (8),
- la paroi cylindrique (5), près du couvercle (7) est percée d'au moins une première ouverture (14) et, sur une ligne périphérique située entre la première ouverture 14) et le fond (6), se trouve au moins une seconde ouverture (13),
- un corps tubulaire (10) est logé dans l'espace cylindrique entouré par la paroi cylindrique (5), le fond (6) et le couvercle (7),
- à une de ses extrémités le corps tubulaire (10) est relié de manière étanche au canal d'écoulement (8) tandis que son autre extrémité est à une certaine distance du fond (6) et présente une ouverture (12),
- à l'intérieur du corps tubulaire (10) se déplace librement un corps (11) présentant une section circulaire dont le diamètre est supérieur à celui du canal d'écoulement (8) mais inférieur à celui du corps tubulaire (10), sa dimension la plus faible étant supérieure à la fente séparant le corps tubulaire (10) et le fond (6),
caractérisé en ce que
quand le récipient est placé tête en bas, l'ouverture (12) pratiquée dans le corps tubulaire (10) est située à une certaine distance verticale de l'autre ouverture (13) de sorte qu'en service, l'équilibrage qui s'établit à la surface du liquide contenu dans le doseur, entre la pression du liquide et la pression du volume d'air qui se trouve au-dessus du niveau du liquide, produit l'arrêt de la montée de ce niveau avant que celui-ci atteigne l'ouverture (12) du corps tubulaire (10).

2. Doseur selon la revendication 1,
caractérisé en ce que
la liaison entre le corps tubulaire (10) et le canal d'écoulement (8) a la forme d'un entonnoir et le corps librement mobile (11) présente au moins une extrémité hémisphérique.

3. Doseur selon la revendication 1,
caractérisé en ce que
la liaison entre le corps tubulaire (10) et le canal d'écoulement (8) a la forme d'un entonnoir et le corps librement mobile (11) présente au moins une extrémité conique.

4. Doseur selon l'une des revendications 1 à 3,
caractérisé en ce que
le canal de sortie (8) et le corps tubulaire (10) sont en appui sur la face interne de la paroi cylindrique (5).

5. Doseur selon l'une des revendications 1 à 4,
caractérisé en ce qu'
il est réalisé en un matériau flexible.

6. Doseur selon l'une des revendications 2 à 5,
caractérisé en ce qu'
il est composé de trois parties,
la paroi cylindrique (5) et le fond (6) formant une première partie, le couvercle (7), le canal d'écoulement (8), l'entonnoir (9) et le corps tubulaire (10) formant une deuxième partie tandis que le corps librement mobile (11) constitue la troisième partie, la première partie pouvant être emmanchée coaxialement dans la deuxième.

7. Doseur selon la revendication 6,
caractérisé en ce que
sous le couvercle (7) se trouvent des espaceurs (20) qui, à l'état emmanché, reposent sur le bord supérieur de la paroi (5), de sorte qu'entre le couvercle (7) et la paroi cylindrique (5) est formée la première ouverture (14) constituée par une fente annulaire.

8. Doseur selon la revendication 6 ou 7,
caractérisé en ce que
sur la face interne de la paroi cylindrique (5), près de son bord supérieur, se trouve un bourrelet annulaire (19) et pour assurer l'appui avec centrage de celui-ci, le canal de sortie (8) porte des bras radiaux (15) dont les extrémités externes supérieures sont bloquées sous le bourrelet annulaire (17).

9. Doseur selon l'une des revendications 6 à 8,
caractérisé en ce que
pour assurer un appui, avec centrage, du corps tubulaire (10) sur la face interne de la paroi cylindrique (5), cette paroi porte des barrettes radiales (16) dirigées vers l'intérieur, situées près du fond (6) et dont les bords supérieurs sont an pente descendante.

10. Doseur selon l'une des revendications 1 à 9,
caractérisé en ce que
le corps à mouvement libre (11) a un volume d'immersion tel que le volume de la chambre principale de dosage (19) entourée par le corps tubulaire (10) entre l'ouverture (12) et le fond (6), une fois retiré le volume d'immersion, est égal au volume de la quantité de liquide à doser.

11. Doseur selon l'une des revendications 1 à 9,
caractérisé an ce que
le corps à mouvement libre (11) présente un volume tel que le volume de la chambre principale de dosage (19), diminué du volume du corps, est supérieur au volume du liquide à doser.

12. Utilisation d'un doseur à deux chambres selon l'une des revendications 1 à 9, pour doser des liquides provenant d'un récipient collecteur, selon laquelle avec un corps à mouvement libre (11) ayant une densité inférieure à celle du liquide à doser, le volume d'immersion de ce corps est défini de manière que la volume de la chambre principale de dosage, diminué du volume d'immersion, est égal au volume du liquide à doser.

13. Utilisation d'un doseur à deux chambres selon l'une des revendications 1 à 9, pour doser des liquides provenant d'un récipient collecteur, selon laquelle avec un corps à mouvement libre (11) ayant une densité supérieure à celle du liquide à doser, le volume d'immersion de ce corps est défini de manière que le volume de la chambre principale de dosage, diminué du volume d'immersion, est supérieur au volume du liquide à doser d'une quantité correspondant au volume résiduel subsistant dans la chambre principale de dosage après que le corps (11) ait coulé et obturé le canal d'écoulement (8).
